# FASCICULE DE BREVET EUROPEEN

(11) **EP 2 449 017 B1**
(45) Date de publication et mention de la délivrance du brevet: **22.08.2018**
(21) Numéro de dépôt: 10725769.3
(22) Date de dépôt: 22.06.2010
(51) Int. Cl.: C08K 5/134, C08K 5/20, C08K 5/25, C08L 77/00, C08L 77/02, C08L 77/06, C08K 5/132

(54) **COMPOSITION POLYAMIDE MODIFIEE COMPRENANT AU MOINS UN COMPOSE PHENOLIQUE**
MODIFIZIERTE POLYAMIDZUSAMMENSETZUNG MIT MINDESTENS EINER PHENOLVERBINDUNG
MODIFIED POLYAMIDE COMPOSITION COMPRISING AT LEAST ONE PHENOLIC COMPOUND

(30) Priorité: 30.06.2009 FR 0954445
(43) Date de publication de la demande: 09.05.2012
(73) Titulaire: Rhodia Opérations, 93306 Aubervilliers (FR)
(72) Inventeur: VERGELATI, Caroll, F-38118 Saint Baudille de la Tour (FR); ANDRES, Olivier, F-69780 Mions (FR)
(74) Mandataire: Schuck, Alexander
(86) Numéro de dépôt international: PCT/EP2010/058775
(87) Numéro de publication internationale: WO 2011/000735

(56) Documents cités:
- EP-A- 0 974 575
- EP-A- 1 251 148
- EP-A1- 0 591 054
- CN-A- 101 117 436
- GB-A- 2 227 748
- US-A- 5 102 935
- US-A1- 2004 214 963
- A. J. Kapadia ET AL: "Interaction of weak organic acids with insoluble polyamides II. Study of sorption of selected weak organic acids by nylon 610", Journal of Pharmaceutical Sciences, vol. 53, no. 1, 1 January 1964 (1964-01-01), pages 28-34, XP055080383, ISSN: 0022-3549, DOI: 10.1002/jps.2600530105

## Description

La présente invention concerne l'utilisation d'un composé phénolique pour la fabrication d'un polyamide modifié ayant un taux de cristallinité augmenté. L'invention concerne également une composition polyamide comprenant au moins un tel composé phénolique et éventuellement des charges de renfort ou de remplissage. La composition est préférentiellement une composition à mouler, par exemple sous forme de granulés ou de poudre, servant à la fabrication d'articles par un procédé de moulage par injection.

Les polyamides techniques sont utilisés pour la réalisation de nombreux articles dans différents domaines, comme le domaine de l'automobile, où des propriétés spécifiques de rigidité, de résistance aux chocs, de stabilité dimensionnelle, en particulier à température relativement élevée, d'aspect de surface, de densité et de poids sont particulièrement recherchées. Le choix d'un matériau pour une application donnée est généralement guidé par le niveau de performances exigées vis-à-vis de certaines propriétés et par son coût. On cherche en effet toujours de nouveaux matériaux susceptibles de répondre à un cahier des charges en terme de performance et/ou de coûts.

Le document US 5,102,935 décrit des compositions comprenant du polyamides et des composés cristaux liquides. Le document EP 0 974 575 décrit des plastifiants à bases d'esters p-hydroxybenzoïques. Par ailleurs, les documents US 2004/0214963 et EP 1 251 148 décrivent des résines polyamides comprenant un plastifiant de type ester d'acide de o- ou p-hydroxybenzoïque et d'alcools aliphatiques en C12-C22. Enfin, GB 2 227 748 décrit des compositions comprenant des agents de fragrance.

La demanderesse vient de découvrir de manière tout a fait surprenante que l'utilisation d'un composé phénolique particulier dans une composition polyamide permettait l'obtention de nouveaux compromis de propriétés quant à la maîtrise de la stabilité dimensionnelle dont la signature sur le matériau est une meilleure inhibition de l'absorption d'eau, de meilleurs propriétés barrières à la diffusion d'espèce et une plus grande fluidité à la transformation en voie fondue. Il apparaît en effet que le composé phénolique particulier selon l'invention agirait comme un agent augmentant le taux de cristallinité du polyamide.

La présente invention concerne ainsi une composition polyamide comprenant au moins un polyamide et un composé de formule (I), et éventuellement des charges de renfort ou de remplissage et éventuellement des additifs classiquement utilisés dans le domaine.

L'invention divulgue également l'utilisation d'un composé de formule (I) comme agent augmentant le taux de cristallinité du polyamide. L'invention décrit ainsi également l'utilisation d'un composé de formule (I) pour la fabrication d'un polyamide modifié présentant un taux de cristallinité augmenté.

L'invention divulgue aussi l'utilisation d'un composé de formule (I) pour augmenter les propriétés barrières d'une composition polyamide.

L'invention décrit par ailleurs l'utilisation d'un composé de formule (I) pour diminuer la reprise en eau d'une composition polyamide.

L'invention divulgue aussi l'utilisation d'un composé de formule (I) pour augmenter la fluidité en fondue d'une composition polyamide.

La composition est préférentiellement une composition à mouler, par exemple sous forme de granulés ou de poudre, servant à la fabrication d'articles par un procédé de moulage par injection.

Le composé phénolique de l'invention est représenté par la formule (I) : 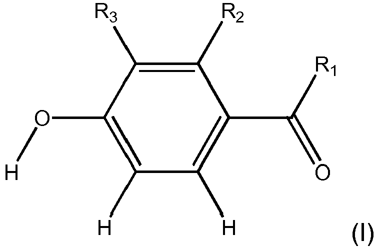 dans laquelle R1 est un atome d'hydrogène; les groupements, R2 et R3 représentent, de manière indépendante les uns des autres, un atome d'hydrogène, un groupement hydroxyle, un groupement alkyle linéaire ou ramifié comprenant de 1 à 6 atomes
de carbone comprenant éventuellement des hétéroatomes, un groupement aryle comprenant de 1 à 20 atomes de carbone comprenant éventuellement des hétéroatomes, ou un groupement NnHn+1 dans lequel n est égal à 1 ou 2.

Il est entendu que le groupement aryle peut être substitué, notamment par des chaînes alkyles.

Préférentiellement le groupement aryle comprend de 1 à 6 atomes de carbone. Préférentiellement les hétéroatomes sont l'oxygène ou l'azote.

R₂ et R₃, indépendamment l'un de l'autre peuvent correspondre à un atome d'hydrogène, un hydroxyle, un NH₂, un N₂H₃, un méthyle, un éthyle, un méthoxy, un éthoxy, ou un benzène.

Préférentiellement R3 est un atome d'hydrogène, un méthoxy ou un éthoxy.

Préférentiellement R2 est un atome d'hydrogène.

Les composés de formule (I) sont tout préférentiellement choisis dans le groupe comprenant : la vanilline [121-33-5], l'éthyle vanilline [121-32-4], le 4-hydroxy benzaldéhyde [123-08-0].

Des mélanges de composés de formule (I) peuvent notamment être utilisés pour la réalisation de la composition selon l'invention.

La composition polyamide selon l'invention comprend de 1 à 15 % en poids de composé de formule (I), préférentiellement de 4 à 8 % en poids, par rapport au poids total de la composition.

Selon la présente invention, la composition polyamide peut être obtenue de diverses manières connues pour l'ajout de charges et d'additifs dans une composition polyamide.

On peut par exemple la fabriquer par ajout du composé de formule (I) en polymérisation à l'état fondu du polyamide, en présence des monomères du polyamides. Selon le procédé de fabrication d'une composition selon l'invention, on ajoute le composé de formule (I) en mélange à chaud avec le polyamide, notamment formé ou partiellement formé, à l'extrudeuse, notamment avec d'autres composés. On peut également ajouter le composé de formule (I) en phase solide, notamment lors d'une post-condensation du polyamide.

Le polyamide est choisi dans le groupe comprenant : le PA 66, le PA 610, le PA 612, le PA 6.66, le PA 46, le MXD6, le PA 66/6T, le PA 6, le PA 11, et le PA 12.

On utilise généralement des polyamides de poids moléculaires adaptés aux procédés de moulage par injection, bien que l'on puisse utiliser aussi des polyamides de plus faibles viscosités.

Le polyamide peut notamment être un polymère comprenant des chaînes macromoléculaires étoiles ou H, branché, ramifié, hyper-ramifié, et le cas échéant des chaînes macromoléculaires linéaires. Les polymères comprenant de telles chaînes macromoléculaires étoiles ou H sont par exemple décrits dans les documents FR2743077, FR2779730, US5959069, EP0632703, EP0682057 et EP0832149.

Le polyamide peut être un polymère de type arbre statistique, de préférence un copolyamide présentant une structure arbre statistique. Ces copolyamides de structure arbre statistique ainsi que leur procédé d'obtention sont notamment décrits dans le document WO99/03909. La matrice de l'invention peut également être une composition comprenant un polymère thermoplastique linéaire et un polymère thermoplastique étoile, H et/ou arbre tels que décrits ci-dessus. La matrice de l'invention peut également comprendre un copolyamide hyperbranché du type de ceux décrits dans le document WO 00/68298. La composition de l'invention peut également comprendre toute combinaison de polymère thermoplastique linéaire, étoile, H, arbre, copolyamide hyperbranché tel que décrit ci-dessus.

La composition selon l'invention présente préférentiellement de 30 à 95 % en poids de polyamide, préférentiellement de 40 à 80 % en poids, par rapport au poids total de la composition.

La composition peut également comprendre, selon la propriété finale souhaitée, un mélange de polyamide et un ou plusieurs autres polymères, tel que par exemple un autre polyamide, du polyéthylène, du polystyrène, du polypropylène, de la résine ABS, du polycarbonate, du sulfure de polyphénylène, de l'oxyde de polyphénylène, du polyacétal, du polysulfone, de la polyéthersulfone, du polyétherimide, de la polyéthercétone, une résine d'acide polylactique, une résine de polysulfone, une résine élastomère ou des mélanges de ceux-ci.

Les charges de renfort ou de remplissages selon la présente invention, peuvent être par exemple des charges fibreuses et/ou des charges non fibreuses.

Comme charge fibreuses on peut citer les fibres de verre, les fibres de carbone, les fibres naturelles, les fibres d'aramides, et les nanotubes, notamment de carbone. On peut citer comme fibres naturelles le chanvre et le lin. Parmi les charges non fibreuses on peut notamment citer toutes les charges particulaires, lamellaires et/ou les nanocharges exfoliables ou non exfoliables comme l'alumine, le noir de carbone, les argiles alumino-silicates, les montmorillonites, le phosphate de zirconium, le kaolin, le carbonate de calcium, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

Il est parfaitement possible selon l'invention que la composition comprenne plusieurs types de charges de renfort. De façon préférentielle, la charge la plus utilisée peut être les fibres de verres, du type dit coupé (chopped), notamment ayant un diamètre compris entre 7 et 14 µm. Ces charges peuvent présenter un ensimage surfacique qui assure l'adhésion mécanique entre les fibres et la matrice polyamide.

La concentration pondérale des charges de renfort ou de remplissage est comprise avantageusement entre 1 % et 60 % en poids par rapport au poids total de la composition, de préférence entre 15 et 50 %.

La composition selon l'invention peut en outre comprendre des additifs classiquement utilisés pour la fabrication de compositions polyamides. Ainsi, on peut citer les lubrifiants, les agents ignifugeants, les plastifiants, les agents nucléants, les agents modificateurs de chocs, les catalyseurs, les stabilisants lumière et/ou thermique, les antioxydants, les antistatiques, les colorants, les matifiants, les additifs d'aide au moulage ou autres additifs conventionnels.

On peut notamment ajouter à la composition polyamide des agents modifiants la résistance aux chocs. Ce sont généralement des polymères d'élastomères qui peuvent être utilisés à cet effet. Les agents modificateurs de la résilience sont généralement définis comme ayant un module de traction ASTM D-638 inférieur à environ 500 MPa. Des exemples d'élastomères convenables sont les éthylène-ester acrylique-anhydride maléïque, les ethylène-propylène-anhydride maléïque, les EPDM (ethylène-propylène-diène momonère) avec éventuellement un anhydride maléïque greffé. La concentration pondérale en élastomère est avantageusement comprise entre 0,1 et 30 % par rapport au poids total de la composition.

On préfère notamment les agents modificateurs de chocs comprenant des groupements fonctionnels réactifs avec le polyamide. On peut par exemple citer les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées. La proportion en poids de ces agents dans la composition totale est notamment comprise entre 0,1 et 40 %.

Ces charges et additifs peuvent être ajoutés au polyamide modifié par des moyens usuels adaptés à chaque charge ou additif, tel que par exemple lors de la polymérisation ou en mélange en fondu.

Les matériaux et compositions de l'invention sont généralement obtenus par mélange des différents constituants à chaud, par exemple dans une extrudeuse mono ou bivis, à une température suffisante pour maintenir la résine polyamide en milieu fondu ; ou à froid dans un mélangeur mécanique notamment. Généralement, le mélange obtenu est extrudé sous forme de joncs qui sont coupés en morceaux pour former des granulés. Les composés peuvent être ajoutés à n'importe quel moment du processus de fabrication du matériau plastique, notamment par mélange à chaud ou à froid avec la matrice plastique. L'addition des composés et des additifs, comme la résine novolaque, peut être réalisée par ajout de ces composés dans la matrice plastique fondue sous forme pure ou sous forme de mélange concentré dans une matrice telle que par exemple une matrice plastique.

La composition selon l'invention peut être utilisée pour tout procédé de mise en forme des matières plastiques, tels que par exemple les procédés de moulage, notamment le moulage par injection, le rotomoulage, le frittage, la coulée, ou d'extrusion comme l'extrusion soufflage et le filmage, ou encore les procédés de filage. L'invention concerne ainsi aussi des procédés de fabrication d'articles moulés ou extrudés par mise en forme d'une composition de l'invention.

La présente invention concerne notamment aussi un procédé de moulage par injection dans lequel on introduit dans un dispositif de moulage par injection une composition selon l'invention, notamment sous forme de granulés, et l'on procède au moulage.

L'utilisation des compositions selon l'invention est particulièrement intéressante dans le cadre de la fabrication d'articles pour l'industrie automobile ou électrique.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

### Exemple 1 : fabrication des compositions

Des compositions à base de polyamide (PA 66 27AD1 de la société Rhodia, ayant un IV de 140 ml/g selon la norme ISO 307) et de différents taux de vanilline (R1=H, R2=-OCH3, R3=H) sont obtenues par extrusion sur une mini extrudeuse double-vis PRISM 25D. Les caractéristiques de la mise en oeuvre sont les suivantes :
Mini Extrudeuse double vis : PRISM 25D , avec
- un profil de température : 275 - 280 - 275 - 275 - 275°C
- vitesse de vis (rpm): 250
- force moteur (N.m) : 16
- vide : - 0,3 bar

Les joncs sortis de l'extrudeuse sont coulés dans un bac de refroidissement à eau et ensuite granulés. Des éprouvettes sont réalisées par moulage par injection de la manière suivante :
Mini Presse BOY 12M, 12 tonnes, vis de 18 mm
T (°C) fourreau: de 270 à 285
T (°C) moule : 70
Vitesse d'injection (m/s) : 100
Pression d'injection (bar) : 50
Pression de maintien (bar) : 25
Contre pression (bar) : 3
Vitesse de vis (rpm) : 220

Les éprouvettes sont ensuite conditionnées à un degré d'hygrométrie distincts HR50 (HR=humidité relative).

Des films des certaines des compositions sont également et directement mis en oeuvre en sortie d'extrudeuse. Une filière spéciale, appelée filière plate, est adaptée sur le convergeant. Celle-ci permet de mettre la matière extrudée sous la forme d'une nappe de 300 mm de largeur et de la dizaine de microns à 1 mm d'épaisseur, épaisseur réglable manuellement sur toute la largeur de la filière à l'aide de vis.

Le bac de refroidissement habituellement utilisé lors d'une extrusion « classique » est remplacé par la filmeuse composée de :
- deux Chill-Roll : rouleaux régulés en température qui permettent le refroidissement plus ou moins rapide du film
- six rouleaux « supports » qui guident simplement le film
- un double rouleau d'entrainement dont on peut régler la tension et la vitesse
- un rouleau enrouleur dont on peut régler le couple et sur lequel est stocké le produit fini
- une arrivée d'air comprimé en sortie de filière plate pour contrôler le refroidissement du film

### Exemple 2 : analyse des formulations

Différents tests ont été effectuées sur les formulations produits dans l'exemple 1.

Les résultat sont exprimés dans le tableau 1 suivant :

**Tableau 1**

| | **HR** | **Absorption d'eau (%poids)** | **Inhibition (%)** | **Module Young (MPa)** | **Coeff. Diffusion éthanol (g/m².j)** | **Viscosité fondue à 100 s-1 (Pa.s)** |
|---|---|---|---|---|---|---|
| C1 : PA66 témoin | 0 | - | - | 2850 | 149 | 500 |
| | 50 | 2,90 | - | 1220 | nm | nm |
| 1 : 1 % | 0 | - | - | 2900 | nm | 110 |
| | 50 | 2,78 | 4 | 1230 | nm | nm |
| 2 : 4 % | 0 | - | - | 2990 | 42 | nm |
| | 50 | 2,48 | 14,4 | 1160 | nm | nm |
| 3: 8 % | 0 | - | - | 3000 | nm | nm |
| | 50 | 1,89 | 35,0 | 1140 | nm | nm |

| | | | | | | |
|---|---|---|---|---|---|---|
| *nm*=*non mesuré* | | | | | | |

Les mesures d'absorption d'eau sont réalisées selon le norme ISO 1110.

Les mesures de traction (Module d'Young) sont réalisées selon la norme ISO 527.

Les mesures de rhéométrie capillaire qui donnent accès aux propriétés rhéologiques sont réalisées selon la norme ISO 11443.

Les tests de perméabilité à la diffusion d'éthanol (à 40°C et HR0) sont élaborés afin d'évaluer la capacité des différentes compositions à empêcher la diffusion de solvants ou de mélange de solvants. Le principe consiste à déposer un carré de film de 50*50*0,15 mm³ sur une cellule contenant une certaine quantité de solvant, de l'éthanol pur dans le cas présent. Le film vient fermer la cellule après serrage de quatre vis. Une pesée de la cellule est réalisée à intervalles de temps réguliers pour suivre l'évolution de la perte de masse. La mesure peut être réalisée sous hotte à température et HR ambiantes, ou sous étuve à température et HR contrôlées : 40°C et HR0 dans le cas présent. La valeur de la pente de la droite obtenue en suivant l'évolution de la perte de masse en fonction du temps est celle du coefficient de diffusion intrinsèque de la molécule étudiée dans la composition considérée, dans les conditions de température et d'hygrométrie pré-définies.

Il est a noter que dans les mêmes conditions l'utilisation de 4 % en poids d'alcool vanillique permet l'obtention d'une reprise en eau de 2,81 % en poids et que l'utilisation 8 % en poids d'alcool vanillique permet l'obtention d'une reprise en eau de 2,58 % en poids ; par rapport à un témoin comprenant uniquement le polyamide 66 qui permet d'obtenir une reprise en eau de 2,90 % en poids (50% HR pour tous ces essais).

## Revendications

1. Composition polyamide comprenant au moins un polyamide et un composé de formule (I) : 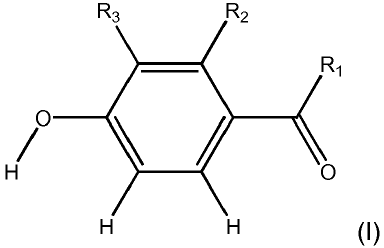
dans laquelle R1 est un atome d'hydrogène ; les groupements R2 et R3 représentent, de manière indépendante les uns des autres, un atome d'hydrogène, un groupement hydroxyle, un groupement alkyle linéaire ou ramifié comprenant de 1 à 6 atomes de carbone comprenant éventuellement des hétéroatomes, un groupement aryle comprenant de 1 à 20 atomes de carbone comprenant éventuellement des hétéroatomes, ou un groupement NnHn+1 dans lequel n est égal à 1 ou 2, et
ladite composition comprend de 1 à 15 % en poids de composé de formule (I), par rapport au poids total de la composition ; et ledit polyamide est choisi dans le groupe comprenant : le PA 66, le PA 610, le PA 612, le PA 6.66, le PA 46, le MXD6, le PA 66/6T, le PA 6, le PA 11, et le PA 12.

2. Composition selon la revendication 1, **caractérisée en ce que** R₂ et R₃, indépendamment l'un de l'autre correspondent à un atome d'hydrogène, un hydroxyle, un NH₂, un N₂H₃, un méthyle, un éthyle, un méthoxy, un éthoxy, ou un benzène.

3. Composition selon l'une quelconque des revendications 1 à 2, **caractérisée en ce que** le composé de formule (I) est choisi dans le groupe comprenant la vanilline, l'éthyle vanilline, le 4-hydroxy benzaldéhyde.

4. Composition selon l'une quelconque des revendications 1 à 3, **caractérisée en ce qu'**elle comprend de 4 à 8 % en poids de composé de formule (I), par rapport au poids total de la composition.

5. Composition selon l'une quelconque des revendications 1 à 4, **caractérisée en ce qu'**elle comprend de 30 à 95 % en poids de polyamide, par rapport au poids total de la composition.

6. Composition selon l'une quelconque des revendications 1 à 5, **caractérisée en ce qu'**elle comprend des charges de renfort ou de remplissage.

7. Procédé de fabrication d'une composition selon l'une quelconque des revendications 1 à 6, **caractérisé en ce que** le composé de formule (I) est ajouté en mélange à chaud avec le polyamide à l'extrudeuse.

8. Procédé de fabrication d'article moulé ou extrudé par mise en forme d'une composition selon l'une quelconque des revendications 1 à 6.

## Patentansprüche

1. Polyamidzusammensetzung mit mindestens einem Polyamid und einer Verbindung mit der Formel (I): 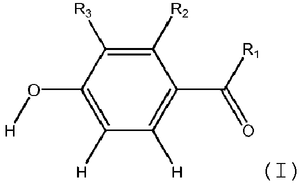
wobei R1 ein Wasserstoffatom ist; die Gruppen R2 und R3 unabhängig voneinander ein Wasserstoffatom, eine Hydroxylgruppe, eine unverzweigte oder verzweigte Alkylgruppe mit 1 bis 6 Kohlenstoffatomen, gegebenenfalls mit Heteroatomen, eine Arylgruppe mit 1 bis 20 Kohlenstoffatomen, gegebenenfalls mit Heteroatomen, oder eine Gruppe NnHn+1 sind, wobei n gleich 1 oder 2 ist, und
die Zusammensetzung 1 bis 15 Gewichts-% der Verbindung mit der Formel (I) bezogen auf das Gesamtgewicht der Zusammensetzung umfasst; und das Polyamid aus der Gruppe ausgewählt ist, die Folgendes umfasst: PA 66, PA 610, PA 612, PA 6.66, PA 46, MXD6, PA 66/6T, PA 6, PA 11 und PA 12.

2. Zusammensetzung nach Anspruch 1, **dadurch gekennzeichnet, dass** R₂ und R₃ unabhängig voneinander einem Wasserstoffatom, einem Hydroxyl, einem NH₂, einem N₂H₃, einem Methyl, einem Ethyl, einem Methoxy, einem Ethoxy oder einem Benzen entsprechen.

3. Zusammensetzung nach Anspruch 1 oder 2, **dadurch gekennzeichnet, dass** die Verbindung mit der Formel (I) aus der Gruppe ausgewählt ist, die Vanillin, Ethylvanillin, 4-Hydroxybenzaldehyd umfasst.

4. Zusammensetzung nach einem der Ansprüche 1 bis 3, **dadurch gekennzeichnet, dass** sie bezogen auf das Gesamtgewicht der Zusammensetzung 4 bis 8 Gewichts-% der Verbindung mit der Formel (I) umfasst.

5. Zusammensetzung nach einem der Ansprüche 1 bis 4, **dadurch gekennzeichnet, dass** sie bezogen auf das Gesamtgewicht der Zusammensetzung 30 bis 95 Gewichts-% Polyamid umfasst.

6. Zusammensetzung nach einem der Ansprüche 1 bis 5, **dadurch gekennzeichnet, dass** sie Verstärkungsfüllstoffe oder Füllstoffe umfasst.

7. Verfahren zur Herstellung einer Zusammensetzung nach einem der Ansprüche 1 bis 6, **dadurch gekennzeichnet, dass** die Verbindung mit der Formel (I) als heiße Mischung mit dem Polyamid in den Extruder gegeben wird.

8. Verfahren zur Herstellung eines geformten oder extrudierten Gegenstands durch Formgebung einer Zusammensetzung nach einem der Ansprüche 1 bis 6.

## Claims

1. Polyamide composition comprising at least one polyamide and a compound of formula (I): 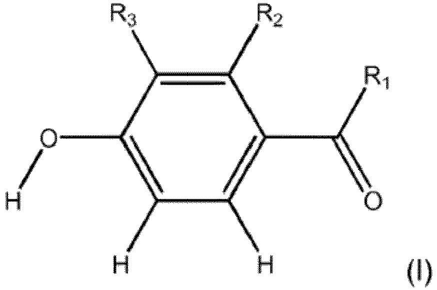
in which R₁ is a hydrogen atom; the R₂ and R₃ groups represent, independently of one another, a hydrogen atom, a hydroxyl group, a linear or branched alkyl group comprising from 1 to 6 carbon atoms optionally comprising heteroatoms, an aryl group comprising from 1 to 20 carbon atoms optionally comprising heteroatoms, or an NₙHₙ₊₁ group in which n is equal to 1 or 2, and
the said composition comprises from 1% to 15% by weight of compound of formula (I), with respect to the total weight of the composition; and the said polyamide is chosen from the group consisting of: PA 66, PA 610, PA 612, PA 6.66, PA 46, MXD6, PA 66/6T, PA 6, PA 11 and PA 12.

2. Composition according to Claim 1, **characterized in that** R₂ and R₃ correspond, independently of one another, to a hydrogen atom, a hydroxyl, an NH₂, an N₂H₃, a methyl, an ethyl, a methoxy, an ethoxy or a benzene.

3. Composition according to either one of Claims 1 and 2, **characterized in that** the compound of formula (I) is chosen from the group consisting of vanillin, ethyl vanillin and 4-hydroxybenzaldehyde.

4. Composition according to any one of Claims 1 to 3, **characterized in that** it comprises from 4% to 8% by weight of compound of formula (I), with respect to the total weight of the composition.

5. Composition according to any one of Claims 1 to 4, **characterized in that** it comprises from 30% to 95% by weight of polyamide, with respect to the total weight of the composition.

6. Composition according to any one of Claims 1 to 5, **characterized in that** it comprises reinforcing or bulking fillers.

7. Process for the manufacture of a composition according to any one of Claims 1 to 6, **characterized in that** the compound of formula (I) is added by hot blending with the polyamide in the extruder.

8. Process for the manufacture of a moulded or extruded article by shaping a composition according to any one of Claims 1 to 6.
